# FASCICULE DE BREVET EUROPEEN

(11) **EP 2 008 489 B1**
(45) Date de publication et mention de la délivrance du brevet: **06.06.2018**
(21) Numéro de dépôt: 07731896.2
(22) Date de dépôt: 17.04.2007
(51) Int. Cl.: H04W 76/02, H04L 29/06, H04W 80/04

(54) **GESTION DE FLUX APPLICATIFS DANS DES RÉSEAUX MOBILES**
VERWALTUNG VON APPLIKATIVEN STRÖMEN IN MOBILNETZEN
MANAGEMENT OF APPLICATIVE STREAMS IN MOBILE NETWORKS

(30) Priorité: 18.04.2006 FR 0603411
(43) Date de publication de la demande: 31.12.2008
(73) Titulaire: Orange, 75015 Paris (FR)
(72) Inventeur: BONJOUR, Servane, 35690 Acigne (FR); GUILLOUARD, Karine, 35135 Chantepie (FR); SUCIU, Lucian, 35510 Cesson Sevigne (FR)
(74) Mandataire: Vidon Brevets & Stratégie
(86) Numéro de dépôt international: PCT/FR2007/051120
(87) Numéro de publication internationale: WO 2007/119024

(56) Documents cités:
- EP-A- 1 458 148
- US-A1- 2004 223 602
- US-B1- 6 651 101
- US-B1- 6 718 380
- R. BRADEN, L. ZHANG, S. BERSON, S. HERZOG: "RFC 2205: Resource ReSerVation Protocol" REQUEST FOR COMMENTS, [Online] septembre 1997 (1997-09), pages 1-70, XP002421652 University of Michigan Extrait de l'Internet: URL:http://www.faqs.org/rfcs/rfc2205.html> [extrait le 2007-02-23]
- D. DURHAM, J. BOYLE, R.COHEN, S. HERZOG, R. RAJAN, A.SASTRY: "RFC 2748: The COPS (Common Open Policy Service) protocol" REQUEST FOR COMMENTS, [Online] janvier 2000 (2000-01), pages 1-32, XP002421672 Extrait de l'Internet: URL:http://www.rfc-editor.org/rfc/rfc2748. txt> [extrait le 2007-02-23]

## Description

### 1. DOMAINE DE L'INVENTION

Le domaine de l'invention est celui des graphes de décision.

Plus précisément, l'invention concerne une technique de construction de graphes de décision pour la gestion de flux applicatifs affectés à des terminaux, chaque flux applicatif étant établi entre un terminal et un correspondant (c'est-à-dire un équipement avec lequel communique le terminal), via au moins un réseau de communication.

Dans la suite de la description, on suppose qu'un utilisateur utilise une ou plusieurs applications (par exemple une application « Email » et une application « Vidéo à la demande ») grâce à un terminal dont il dispose, et qu'un flux applicatif distinct est établi avec le terminal de l'utilisateur pour chacune de ces applications. En d'autres termes, on confond volontairement les notions de terminal et d'utilisateur de ce terminal.

L'invention s'applique notamment, mais non exclusivement, à la mise en oeuvre d'un service de mobilité de terminaux entre réseaux d'accès (gestion des transferts intercellulaires (handovers)).

Elle peut aussi s'appliquer à d'autres types de décision, comme par exemple la répartition des ressources de qualité de service (bande passante par exemple). Dans ce dernier cas, la décision est une décision de réservation, pour un flux, d'une classe de service particulière.

Dans le cas particulier d'un service de mobilité, l'objet de l'invention est de favoriser la coopération entre les réseaux d'accès permettant l'offre d'un service de mobilité entre les différents réseaux de technologies différentes de l'opérateur mais également d'autres opérateurs. En effet, dans le cadre du déploiement d'un service de mobilité entre réseaux d'accès hétérogènes, il est primordial que l'opérateur garde le contrôle de la mobilité des terminaux. Or, il est aussi important que la mobilité soit la mieux adaptée à chaque application de chaque terminal pour assurer un service de qualité qui sera plébiscité par les utilisateurs. Ainsi, un compromis doit être trouvé entre une mobilité efficace et une limitation des informations échangées entre les différents éléments du réseau gérant la mobilité (terminal y compris). L'invention va dans le sens de ce compromis puisqu'elle permet de limiter le nombre de paramètres échangés (en les prenant en compte localement et en étant en permanence adapté aux applications et aux utilisateurs) tout en permettant une mobilité efficace (pertinence des informations permettant d'anticiper la mobilité).

L'invention s'applique dans tous types de réseau de données et est indépendante de la technologie des réseaux d'accès (GPRS (« General Packet Radio Service », c'est-à-dire « service général de radiocommunication par paquets »), UMTS (« Universal Mobile Télécommunication System », c'est-à-dire « système universel de télécommunication avec les mobiles »), WLAN (« Wireless Local Area Network », c'est-à-dire « réseau local sans fil »), Ethernet...).

Dans la présente description, on utilise les définitions classiques suivantes :
- « graphe de décision » : il représente un ensemble de modules de décision et leurs relations (par exemple module PDP (Policy Decision Point) de l'IMS (IP Multimedia Subsystem)). Chaque module de décision exécute un algorithme de prise de décision ;
- « arbre de décision » : il représente la description de décisions sous forme d'un arbre dont les éléments sont les paramètres à évaluer et les feuilles les décisions ;
- « graphe d'exécution » : il représente un ensemble de modules d'exécution prenant part à l'exécution d'une décision, ainsi que leurs relations (par exemple pour Mobile IP, le Home Agent, le Foreign Agent et le terminal). Chaque module d'exécution participe à la mise en oeuvre d'une décision

### 2. ART ANTÉRIEUR

On présente maintenant brièvement quelques techniques de l'art antérieur, avec leurs inconvénients respectifs.

### 2-1) Handover vertical utilisant une approche distribuée

Une première technique connue est décrite dans le document suivant : Tobias Hosfeld et al., "Supporting Vertical Handover by Using a Pastry Peer-to-Peer Overlay Network", Université de Würtzburg - Rapport Technique n° 367, septembre 2005.

Dans cette approche, les mesures radio (puissance du signal reçu, taux d'erreur blocs...) sont distribués dynamiquement entre les points d'attachement situés dans une même zone de décision. A partir de ces mesures, un point d'accès déduit les conditions radio de ses voisins mais uniquement pour la même technologie que lui. Pour obtenir des mesures relatives aux autres technologies, des liens entre les points d'accès sont établis manuellement. La décision de handover est toujours prise soit par le terminal soit par le point d'attachement courant.

Dans cette solution, il n'y a pas de graphe de décision dynamique, seuls certains paramètres de décision sont distribués dynamiquement. Ceci ne permet donc pas d'adapter la décision aux applications et aux terminaux.

### 2-2) Gestion des ressources radio multi-accès GRRM

Une deuxième technique connue est décrite dans le document suivant : P. Magnussen, J. Lundsjo, J. Sachs and P. Wallentin, "Radio Resource Management Distribution in a Beyond 3G Multi-Radio Access Architecture", IEEE GLOBECOM'04.

Dans cette approche, on propose de centraliser certaines fonctions de GRRM, comme le partage de charge, et d'en distribuer d'autres, comme le handover. Le terminal mobile pouvant faire partie de la distribution. Dans les deux cas, un noeud spécifique s'occupe d'un ensemble de cellules d'une même technologie. Ainsi, dans l'approche centralisée, un noeud central multi-techno coordonne plusieurs noeuds mono-technos qui peuvent être de différentes technologies.

Dans cette solution, une sorte de graphe de décision est construit mais celui-ci est identique pour toutes les applications et tous les terminaux sous la coordination d'un noeud de gestion voisin. On retrouve le même problème que pour la première technique connue.

### 2-3) HMIP (Hierarchical Mobile IP) et NC-HMIP (Network Controlled Hierarchical Mobile IP)

Une troisième technique connue est décrite dans les documents suivants :
- H. Soliman et al., "Hierarchical Mobile IPv6 Mobility Management (HMIPv6)", IETF RFC 4140; et
- K. Guillouard et al., "Network-controlled Mobility within Radio Access Networks Based on WLAN Technologies", Annales des Telecommunications, 3, 58, Mars 2003.

Ces deux approches permettent la construction dynamique d'un graphe d'exécution de handover. Un graphe d'exécution de handover est représenté par l'ensemble des entités prenant part à l'exécution du handover. Dans les approches proposée, cette exécution est réalisée au niveau IP par extension du protocole Mobile IPv6. Le graphe d'exécution du handover est constitué d'entités telles que : terminal mobile, point d'accès, point d'ancrage de la mobilité (MAP) et « home agent » (noeud spécial chargé de suivre la position du terminal mobile lors de ses déplacements).

Dans cette troisième technique connue, il n'y a pas de graphe de décision mais un graphe d'exécution de handover (voir ci-dessus les définitions de ces deux types de graphe). De plus, le graphe construit est commun à toutes les applications et à tous les terminaux sous la couverture d'un même routeur d'accès. Il n'y a pas non plus de dialogue entre les différentes entités du réseau pour construire ce graphe. Soit c'est le terminal seul qui décide du graphe de décision (HMIPv6) soit c'est un noeud centralisé du réseau (NC-HMIPv6). On retrouve aussi le même inconvénient que pour les première et deuxième techniques connues.

Enfin, remarquons que dans l'état de la technique, les décisions relatives au choix de paramètres dans un réseau (lié au handover, à la qualité) sont soit centralisées au sein d'un unique dispositif (comme dans les techniques exposées dans les documents US 2004/223602 et EP 1458148), soit distribuées, mais nécessitant dans ce cas de figure, l'intervention de personnes physiques pour prendre les décisions finales (comme dans la technique exposée dans le document US 6718380).

### 3. EXPOSÉ DE L'INVENTION

Dans un mode de réalisation particulier de l'invention, il est proposé un procédé, comme celui de la revendication 1, de construction d'au moins un graphe de décision pour la gestion d'au moins un flux applicatif affecté à un terminal et établi entre ledit terminal et un correspondant via au moins un réseau de communication.

Le principe général de l'invention consiste donc en un mécanisme, pouvant être itéré plusieurs fois, selon lequel un module de décision envoie un message de configuration à un autre module de décision (intermédiaire) par lequel il lui indique avec quel(s) autre(s) modules de décision il pourra lui-même échanger des informations. Le ou les messages de configuration sont envoyés avant le démarrage du flux, au démarrage du flux ou même pendant la durée du flux.

Ainsi, l'invention permet la construction dynamique de graphes de décision possibles par des messages de configuration. Comme détaillé par la suite, une fois ces graphes de décision possibles construits, il est possible de construire de façon dynamique un graphe de décision actif, par échange d'un ou plusieurs messages de décision entre les modules de décision, en respectant la configuration créée par les messages de configuration. Le graphe de décision actif est forcément l'un des graphes de décision possibles.

De façon avantageuse, chaque message de configuration comprend les champs suivants :
- un champ contenant un identifiant du module de décision source dudit message de configuration ;
- un champ contenant un identifiant du module de décision destinataire dudit message de configuration ;
- un champ contenant un identifiant d'au moins ledit terminal, pour lequel ledit message de configuration s'applique ;
- un champ contenant au moins une structure de distribution.

Avantageusement, chaque message de configuration comprend en outre un champ contenant un identifiant dudit au moins un flux applicatif affecté au terminal.

Dans un mode de réalisation particulier de l'invention, chaque message de configuration est spécifique à un terminal et à un flux applicatif.

Avantageusement, chaque structure de distribution comprend les champs suivants :
- un champ contenant un identifiant d'un module de décision tiers, distinct dudit module de décision destinataire ;
- un champ contenant un rôle dudit module de décision tiers ;
- un champ contenant un caractère d'une méthode de distribution à utiliser entre le module de décision destinataire et ledit module de décision tiers ;
- un champ contenant un caractère d'une méthode de décision à utiliser par le module de décision destinataire.

Il est à noter que le module de décision tiers peut être confondu avec le module de décision source.

Selon une caractéristique avantageuse, chaque structure de distribution comprend en outre au moins un champ supplémentaire appartenant au groupe comprenant :
- un champ contenant une granularité supportée ;
- un champ contenant une méthode de distribution à utiliser entre le module de décision destinataire et ledit module de décision tiers ;
- un champ contenant au moins un paramètre définissant ladite méthode de distribution ;
- un champ contenant une méthode de décision à utiliser par le module de décision destinataire ;
- un champ contenant au moins un paramètre définissant ladite méthode de décision.

Avantageusement, chaque message de configuration comprend en outre un champ supplémentaire contenant au moins une structure de déclencheur d'une méthode de décision à utiliser par le module de décision destinataire.

Selon une caractéristique avantageuse, chaque structure de déclencheur comprend les champs suivants :
- un champ contenant un identifiant d'un déclencheur donné ;
- un champ contenant un identifiant du module de décision contenant le déclencheur donné.

Dans un mode de réalisation avantageux de l'invention, chaque message de configuration comprend en outre un champ supplémentaire contenant au moins une structure de paramètres de décision à utiliser par le module de décision destinataire, chaque structure de paramètres comprenant les champs suivants :
- un champ contenant un identifiant d'un paramètre donné ;
- un champ contenant un identifiant du module de décision contenant le paramètre donné ;
- un champ contenant un identifiant du module de décision destinataire du paramètre donné ;
- un champ contenant une fréquence d'envoi du paramètre donné.

De façon avantageuse, ledit procédé comprend en outre une étape de construction dynamique d'un unique graphe de décision actif pour ledit au moins un flux applicatif affecté audit terminal, comprenant elle-même une étape d'échange d'au moins un message de décision entre au moins deux modules de décision, en respectant une configuration préalablement créée par l'étape de construction dynamique d'au moins un graphe de décision possible, ledit unique graphe de décision actif étant le ou l'un des graphes de décision possibles préalablement construits pour ledit au moins un flux applicatif.

Ainsi, en fonction des paramètres dont il dispose, un module de décision envoie un message de décision partielle ou finale à un autre module de décision, en respectant la configuration créée par les messages de configuration.

Avantageusement, chaque message de décision comprend les champs suivants :
- un champ contenant un identifiant du module de décision source dudit message de décision ;
- un champ contenant un identifiant du module de décision destinataire dudit message de décision ;
- un champ contenant un type de décision, partielle ou finale ;
- un champ contenant un identifiant d'au moins ledit terminal, pour lequel ledit message de décision s'applique ;
- un champ contenant une décision.

Avantageusement, chaque message de décision comprend en outre un champ contenant un identifiant dudit au moins un flux applicatif affecté au terminal.

Dans un mode de réalisation particulier de l'invention, chaque message de décision est spécifique à un terminal et à un flux applicatif.

Ainsi, dans ce mode de réalisation particulier, la solution proposée par l'invention consiste à créer dynamiquement un graphe de décision actif de mobilité pour chaque application de chaque utilisateur. En effet, avec la complexité croissante des architectures de réseaux mettant en oeuvreplusieurs types de réseaux d'accès voire même plusieurs opérateurs, la prise de décision de passage d'un réseau d'accès à un autre ne peut être optimale que si elle est définie dynamiquement pour chaque application d'un utilisateur. En effet, en fonction des caractéristiques de l'application, le pouvoir de décision de mobilité n'est pas forcément situé dans le (ou les) mêmes entités (réseau ou terminal). De même, en fonction des politiques mises en place par différents opérateurs, cette même décision ne sera pas distribuée ou hiérarchisée de la même façon. Enfin, les paramètres entrant dans la prise de décision peuvent aussi dépendre de l'application, de l'utilisateur et/ou de la structure du réseau. La solution proposée définit les mécanismes nécessaires à la construction dynamique de tels graphes de décision actifs.

Selon une caractéristique avantageuse, ledit procédé comprend en outre une étape préalable d'obtention d'un graphe de décision général comprenant ledit ensemble déterminé de modules de décision parmi lesquels sont choisis les modules de décision s'échangeant les messages de configuration.

Dans un mode de réalisation particulier de l'invention, ledit ensemble déterminé de modules de décision appartiennent à une architecture de réseaux :
- distribuée, du fait qu'au moins deux modules de décision appartiennent à un même niveau de hiérarchie de ladite architecture, et/ou
- hiérarchisée, du fait qu'au moins deux modules de décision appartiennent à deux niveaux de hiérarchie distincts de ladite architecture.

De façon avantageuse, la gestion dudit au moins un flux applicatif affecté audit terminal appartient au groupe comprenant :
- des gestions de mobilité ;
- des gestions de répartition de ressources de qualité de service.
L'invention concerne un équipement de communication comme celui de la revendication 11, le dit équipement comprenant un module de décision, ledit équipement comprenant des premiers moyens d'échange, permettant d'échanger au moins un message de configuration avec au moins un autre module de décision appartenant à un ensemble déterminé de modules de décision, de façon à participer à la construction dynamique d'au moins un graphe de décision possible pour la gestion d'au moins un flux applicatif affecté à un terminal et établi entre ledit terminal et un correspondant via au moins un réseau de communication. Ledit équipement de communication comprend en outre des seconds moyens d'échange, permettant d'échanger au moins un message de décision avec au moins un autre module de décision appartenant audit ensemble déterminé de modules de décision, en respectant au moins un graphe de décision possible préalablement déterminé, de façon à participer à la construction dynamique d'un unique graphe de décision actif pour ledit au moins un flux applicatif affecté audit terminal.

Avantageusement, ledit équipement de communication appartient au groupe comprenant : ledit terminal, ledit correspondant et des entités dudit au moins un réseau de communication.

Plus généralement, l'équipement de communication selon l'invention comprend des moyens de mise en oeuvre du procédé de construction d'au moins un graphe de décision, tel que décrit précédemment (dans l'un quelconque de ses différents modes de réalisation). L'invention concerne un produit programme d'ordinateur comme celui revendiqué à la revendication 13, ledit produit programme d'ordinateur étant téléchargeable depuis un réseau de communication et/ou enregistré sur un support lisible par ordinateur et/ou exécutable par un processeur, ledit produit programme d'ordinateur comprenant des instructions de code de programme pour l'exécution des étapes du procédé précité de construction d'au moins un graphe de décision pour la gestion d'au moins un flux applicatif affecté à un terminal, lorsque ledit programme est exécuté sur un ordinateur. L'invention concerne également un signal comme celui de la revendication 14, ledit signal étant échangé entre un module de décision source et un module de décision destinataire, dans le cadre de la construction dynamique d'au moins un graphe de décision possible pour la gestion d'au moins un flux applicatif affecté à un terminal et établi entre ledit terminal et un correspondant via au moins un réseau de communication.

### 4. LISTE DES FIGURES

D'autres caractéristiques et avantages de modes de réalisation de l'invention apparaîtront à la lecture de la description suivante d'un mode de réalisation préférentiel de l'invention, donné à titre d'exemple indicatif et non limitatif (tous les modes de réalisation de l'invention ne sont pas limités aux caractéristiques et avantages de ce mode de réalisation préférentiel), et des dessins annexés, dans lesquels :
- la figure 1 présente un exemple d'un graphe de décision général selon l'invention, pour un seul terminal ;
- la figure 2 présente un exemple d'un graphe de décision général selon l'invention, pour deux terminaux ;
- la figure 3 présente un exemple de graphes de décision possibles selon l'invention, pour deux flux vers un seul terminal ;
- la figure 4 présente un exemple de graphes de décision possibles selon l'invention, pour deux flux chacun vers un terminal distinct ;
- la figure 5 présente un exemple de graphes de décision actifs selon l'invention, pour deux flux vers un seul terminal ;
- la figure 6 présente un exemple de graphes de décision actifs selon l'invention, pour deux flux chacun vers un terminal distinct ;
- la figure 7 illustre un exemple de séquence de messages de configuration et de décision entre des modules de décision, selon l'invention ;
- la figure 8 présente un exemple de graphes de décision (possibles et actifs) initiaux, pour deux flux vers un seul terminal, dans le cas d'une gestion de mobilité des applications de l'utilisateur du terminal, selon l'invention ;
- la figure 9 présente un exemple de graphes de décision (possibles et actifs) après déplacement du terminal (par rapport à la situation de la figure 8), pour deux flux vers un seul terminal, dans le cas d'une gestion de mobilité des applications de l'utilisateur du terminal, selon l'invention ;
- la figure 10 illustre un exemple de séquence de messages d'un processus complet de prise de décision correspondant au cas de la figure 9, dans lequel s'intègrent les messages de configuration et de décision selon l'invention ;
- la figure 11 présente la structure d'un équipement de communication selon un mode de réalisation particulier de l'invention, intégrant un module de décision capable d'émettre et/ou traiter des messages de configuration et/ou des messages de décision ;
- la figure 12 présente la structure d'un message de configuration, selon un mode de réalisation particulier de l'invention ; et
- la figure 13 présente la structure d'un message de décision, selon un mode de réalisation particulier de l'invention.

### 5. DESCRIPTION DÉTAILLÉE

Sur toutes les figures du présent document, les éléments et étapes identiques sont désignés par une même référence numérique.

### 5-1 Identifications des éléments techniques essentiels d'un mode de réalisation particulier de l'invention

On suppose au préalable que les différents modules de décision se connaissent et sont capables d'échanger des messages entre eux par des moyens de communications connus.

Une application possible décrite dans la suite est la prise de décision de mobilité des flux d'un utilisateur.

Les éléments essentiels caractérisant un mode de réalisation particulier de l'invention par rapport à l'art antérieur sont décrits ci-après.

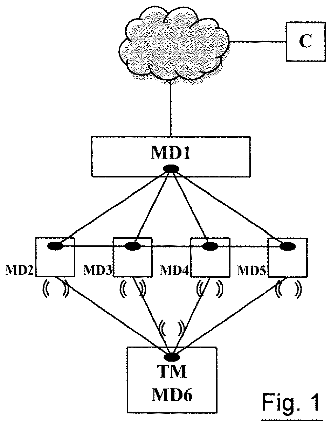

La **figure 1** représente une architecture de décision comprenant six modules de décision (parfois appelés MD par la suite) MD1 à MD6. MD6 est situé dans le terminal TM (pour Terminal Mobile) de l'utilisateur. Un correspondant C peut aussi contenir un module de décision. On suppose que les modules de décision, le terminal mobile et le correspondant sont reliés entre eux par des moyens de communications leur permettant d'échanger des messages. Un ou plusieurs flux applicatifs sont établis entre le terminal mobile et le correspondant.

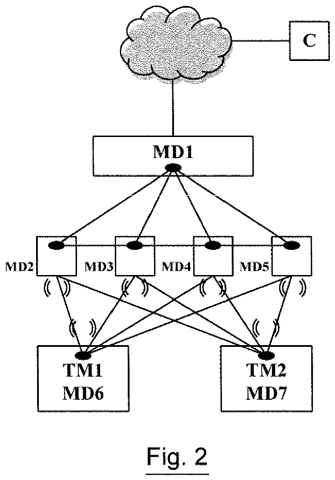

On suppose que le graphe de décision général est connu au préalable. Un exemple de représentation d'un tel graphe de décision général est donné par la **figure 1****,** dans le cas d'un seul terminal TM. Un autre exemple de représentation est donné par **figure 2****,** dans le cas de deux terminaux TM1 et TM2. Ce graphe de décision général est constitué de l'ensemble des modules de décision et de liens (représentés en pointillés) qui les relient.

Les messages de configuration échangés entre les modules de décision permettent de définir les graphes de décision possibles pour chaque flux ou groupe de flux d'un utilisateur.

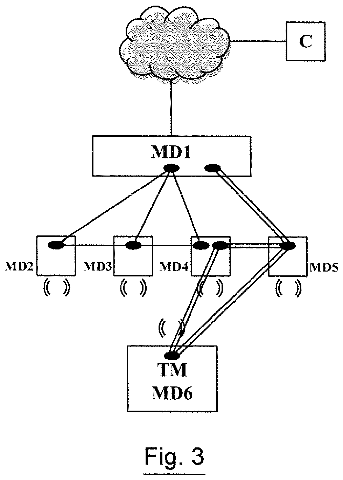

Un exemple de représentation de graphes de décision possibles est donné par la **figure 3****,** dans le cas d'un terminal TM et deux flux. Les graphes de décision possibles pour le premier flux sont représentés en pointillés simples et impliquent les modules de décision référencés MD1, MD2, MD3 et MD4. Les graphes de décision possibles pour le second flux sont représentés en pointillés doubles et impliquent les modules de décision référencés MD1, MD4, MD5 et MD6.

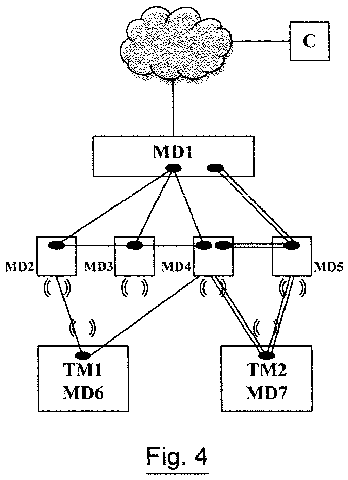

Un autre exemple de représentation de graphes de décision possibles est donné par la **figure 4****,** dans le cas de deux terminaux TM1 et TM2, et deux flux. Les graphes de décision possibles pour le premier flux vers le premier terminal TM1 sont représentés en pointillés simples et impliquent les modules de décision référencés MD1, MD2, MD3, MD4 et MD6. Les graphes de décision possibles pour le second flux vers le second terminal TM2 sont représentés en pointillés doubles et impliquent les modules de décision référencés MD1, MD4, MD5 et MD7.

Il est à noter que lorsqu'un module de décision MD accepte un message de configuration, il fait obligatoirement partie des graphes de décision possibles. Par contre les méthodes de distribution et de décision indiquées dans les messages de configuration ne sont pas forcément obligatoires, cela dépend du champ "caractère" véhiculé par les messages de configuration.

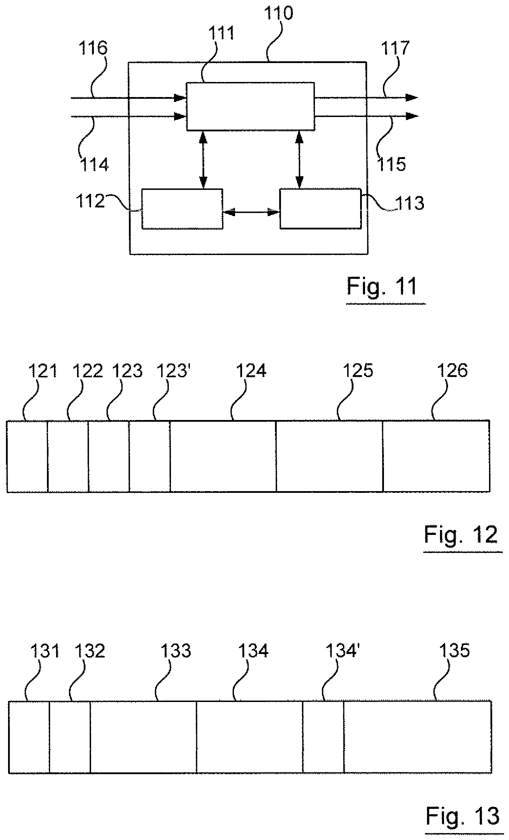

Comme illustré sur la **figure 12****,** dans un mode de réalisation particulier de l'invention, les messages de configuration contiennent au moins les champs suivants :
- un champ 121 contenant une adresse du MD source du message (adresse IP par exemple) ;
- un champ 122 contenant une adresse du MD destination du message (adresse IP par exemple) ;
- un champ 123 contenant un identifiant de l'utilisateur, pour lequel les graphes s'appliquent ; et optionnellement un champ 123' contenant un identifiant du flux associé à l'utilisateur et pour lequel les graphes s'appliquent. Si ce dernier champ 123' n'est pas présent, les graphes s'appliquent par défaut à l'ensemble des flux associés à l'utilisateur ;
- un champ 124 contenant une ou plusieurs structures de distribution contenant chacune au moins les champs suivants :
   * l'adresse ou l'identifiant d'un module de décision tiers (adresse IP...) ;
   * le rôle du MD tiers; hiérarchique ou pair (de même niveau) ;
   * le caractère de la méthode de distribution : obligatoire, suggérée ou "par défaut" ;
   * le caractère de la méthode de décision : obligatoire, suggérée ou "par défaut".

Il est à noter que l'identifiant utilisateur peut représenter un groupe d'utilisateurs. De même l'identifiant de flux peut représenter un ensemble de flux et même un terminal.

Les messages de configuration peuvent aussi contenir les champs optionnels suivants :
- pour chaque structure de distribution :
   * un champ contenant la granularité supportée (par flux, par application, par utilisateur...) ;
   * un champ contenant la méthode de distribution à utiliser entre le MD destination et le MD tiers ("conflict free" (sans conflit), "Enforced team" ...) ;
   * un champ contenant les paramètres définissant la méthode de distribution (poids des objectifs par exemple) ;
   * un champ contenant la méthode de décision à utiliser par le MD destination (logique floue, fonction d'utilité...) ;
   * un champ contenant les paramètres définissant la méthode de décision (fonction d'utilité, coeffcient de la fonction d'utilité...) ;
- un champ 125 contenant une ou plusieurs structures de déclencheurs de la méthode de décision contenant chacune les champs suivants :
   * un champ contenant le nom du déclencheur (cf. annexe 2) ;
   * un champ contenant l'adresse du module contenant ce déclencheur ;
- un champ 126 contenant une ou plusieurs structures de paramètres de décision, contenant chacune les champs suivants :
   * un champ contenant le nom du paramètre (cf. annexe 2) ;
   * un champ contenant l'adresse du module contenant ce paramètre ;
   * un champ contenant l'adresse du module destinataire du paramètre ;
   * un champ contenant une fréquence d'envoi du paramètre.

Une fois la configuration des modules de décision effectuée, c'est-à-dire après que tous les graphes de décision possibles sont établis pour un flux et un utilisateur donné, le graphe de décision actif est construit dynamiquement par échange des messages de décision (partielle ou finale) en fonction des besoins (par exemple, lors d'une congestion d'un réseau d'accès, ou suite à un déplacement de l'utilisateur). Les modules de décision peuvent être reconfigurés à tout moment.

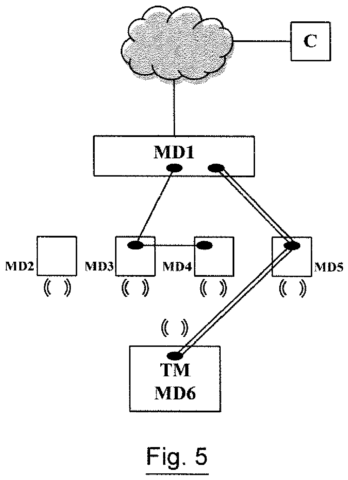

La **figure 5** donne un exemple de graphes de décision actifs dans le cas d'un terminal TM et deux flux. Le graphe de décision actif pour le premier flux est représenté en pointillés simples et implique les modules de décision référencés MD1, MD3 et MD4. Le graphe de décision actif pour le second flux est représenté en pointillés doubles et implique les modules de décision référencés MD1, MD5 et MD6.

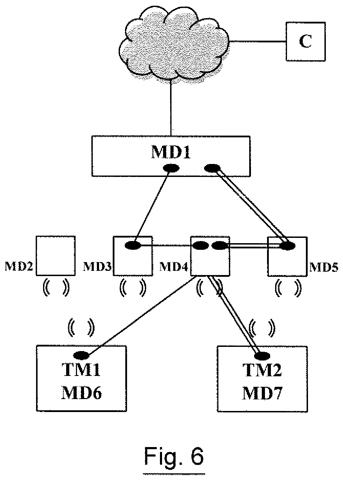

La **figure 6** donne un exemple de graphe de décision actif dans le cas de deux terminaux TM1 et TM2 et deux flux. Le graphe de décision actif pour le premier flux vers le premier terminal TM1 est représenté en pointillés simples et implique les modules de décision référencés MD1, MD3, MD4 et MD6. Le graphe de décision actif pour le second flux vers le second terminal TM2 est représenté en pointillés doubles et implique les modules de décision référencés MD1, MD4, MD5 et MD7.

Comme illustré sur la **figure 13****,** dans un mode de réalisation particulier de l'invention, les messages de décision contiennent au moins les champs suivants :
- un champ 131 contenant une adresse du MD source du message (adresse IP par exemple) ;
- un champ 132 contenant une adresse du MD destination du message (adresse IP par exemple) ;
- un champ 133 contenant le type de la décision (décision partielle ou finale) ;
- un champ 134 contenant un identifiant de l'utilisateur, pour lequel la décision s'applique ; et optionnellement un champ 134' contenant un identifiant du flux associé à l'utilisateur et pour lequel la décision s'applique. Si ce dernier champ 134' n'est pas présent, la décision s'applique par défaut à l'ensemble des flux associés à l'utilisateur ;
- un champ 135 contenant une décision (par exemple une décision finale de handover vers un point d'accès particulier, ou une décision partielle de handover vers un réseau d'accès particulier).

Il est à noter que l'identifiant utilisateur peut représenter un groupe d'utilisateurs. De même l'identifiant de flux peut représenter un ensemble de flux.

En résumé, l'invention permet :
- la construction dynamique de graphes de décision possibles par des messages de configuration (modules de décision pairs, paramètres à échanger entre les modules, paramètres à évaluer, localisation de ses paramètres) ;
- la construction dynamique des graphes de décision actifs par échange de messages de décision partielle entre les modules de décision; un graphe actif est forcément l'un des graphes possibles.

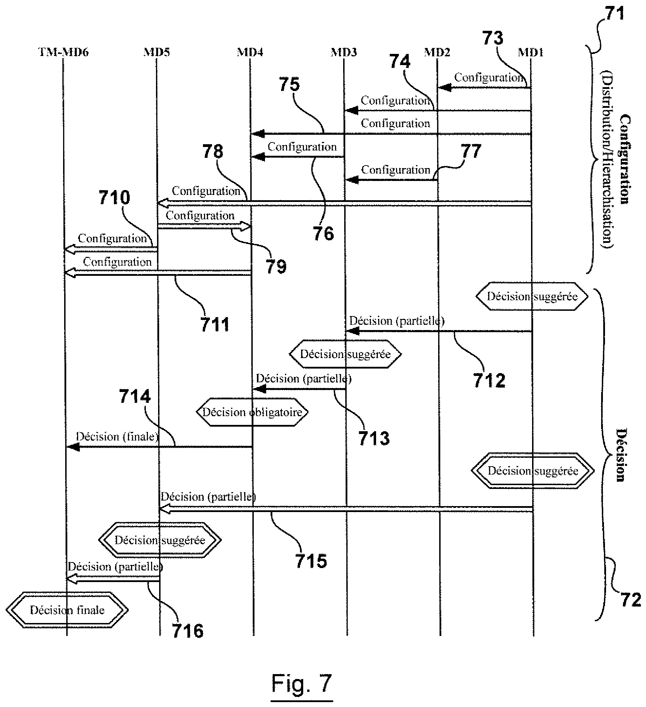

La **figure 7** montre un échange possible de messages entre les différents modules de décision dans le cas d'un terminal TM et deux flux déjà discuté ci-dessus en relation avec la figure 3 (pour les graphes de décision possibles pour chacun des flux) et la figure 5 (pour le graphe de décision actif pour chacun des flux). Pour plus de clarté, sur la figure 7, les deux fonctions configuration 71 et décision 72 sont séparées mais en réalité les messages correspondant à chaque fonction peuvent s'intercaler.

Les messages de configuration pour le premier flux sont référencés 73 à 77 et représentés en traits simples ; ils impliquent les modules de décision référencés MD1, MD2, MD3 et MD4. Les messages de configuration pour le second flux sont référencés 78 à 711 et représentés en traits doubles; ils impliquent les modules de décision référencés MD1, MD4, MD5 et MD6.

Les messages de décision pour le premier flux sont référencés 712 à 714 et représentés en traits simples ; ils impliquent les modules de décision référencés MD1, MD3, MD4 et MD6. Les messages de décision pour le second flux sont référencés 715 et 716 et représentés en traits doubles ; ils impliquent les modules de décision référencés MD1, MD5 et MD6.

### 5-2) Description détaillée d'un mode particulier de réalisation dans le cas de la gestion de mobilité

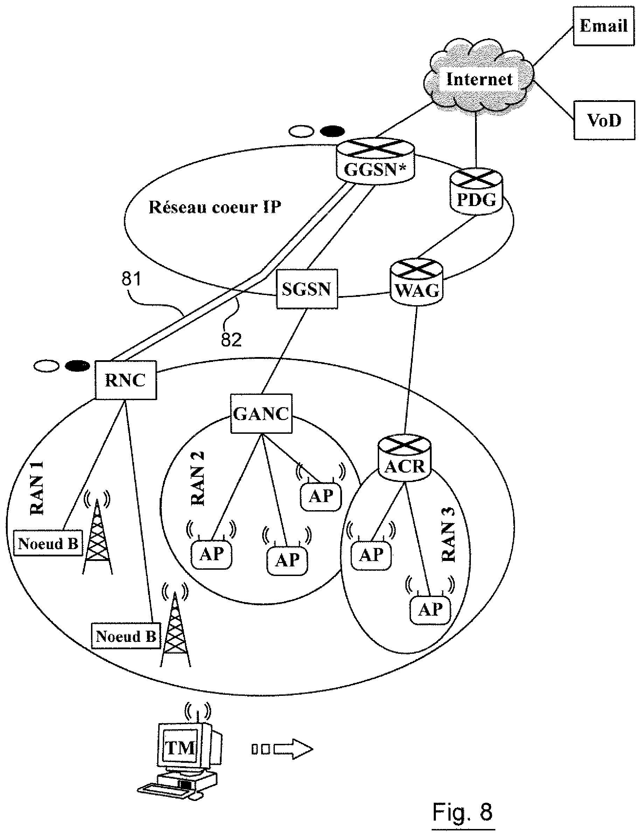

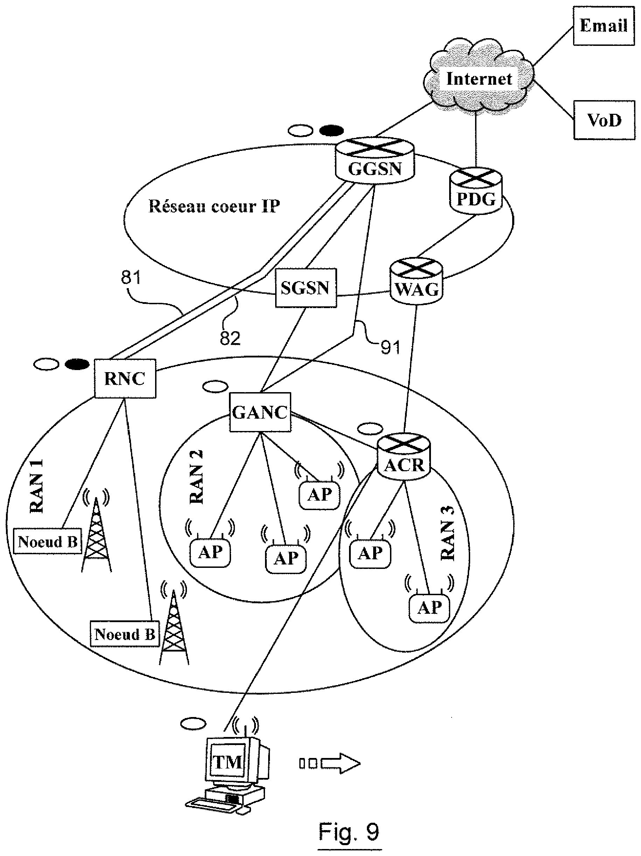

Dans l'exemple présenté ci-après en relation avec les figures 8 et 9, l'invention est appliquée pour gérer la mobilité des applications d'utilisateurs utilisant des terminaux mobiles. On considère à titre d'exemple la gestion de la mobilité dans le cas de deux flux affectés à un terminal : le premier flux correspond par exemple à une application Email, et le second flux à une application Vidéo à la demande (VoD).

L'invention prend tout son sens, même si elle n'est pas limitée à ce cas, dans une architecture mettant en oeuvre plusieurs réseaux d'accès, comme celle représentée par la **figure 8****.**

Sur les figures 8 et 9, quand un graphe de décision possible et un graphe de décision actif sont confondus pour un flux donné, seul le graphe de décision actif apparaît.

Par ailleurs, sur les figures 8 et 9 et dans la suite de la description, on utilise les sigles suivants : ACR (Routeur d'accès contrôleur), AP (Point d'accès), GANC (Contrôleur de réseau d'accès générique), GGSN (Passerelle de support GPRS), MD (Module de decision), PDG (Passerelle de données paquets), RAN (Réseau d'accès radio), RNC (Contrôleur de réseau radio), SGSN (Noeud serveur GPRS), TM (Terminal mobile), VoD (Vidéo à la demande) et WAG (Passerelle WLAN).

La première étape consiste à la reconnaissance mutuelle des équipements de communication comprenant un module de décision pouvant prendre part à la décision. On suppose que ceci est prédéfini, c'est-à-dire que tous les modules de décision possibles sont connus.

La deuxième étape consiste à configurer les modules de décision et à élaborer les graphes de décision possibles et actifs pour les applications qui démarrent.

Grâce à l'invention, des messages de configuration sont échangés entre les différentes entités (GGSN (Passerelle de support GPRS) et RNC (Contrôleur de réseau radio) dans cet exemple) pour aboutir aux graphes de décision possibles de la figure 8.

Dans cet exemple, les deux graphes possibles et actifs sont confondus et ils sont identiques pour les deux applications, ils passent par le GGSN et le RNC. Le graphe de décision actif 82 pour le premier flux (application Email) est en trait plein épais, tandis que celui 81 pour le second flux (application Vidéo à la demande) est en trait plein fin.

Suite à cette deuxième étape, le GGSN est configuré de telle sorte qu'il prendra une décision partielle, pour chacune des deux applications déclarées, Email et VoD, en tenant compte de paramètres tels que : le crédit disponible, le droit d'accès, le besoin de sécurité des applications, et les préférences de l'utilisateur en terme de coût.

Cette décision partielle sera envoyée au RNC grâce à un message de décision défini par l'invention. De la même façon, le RNC est configuré de telle sorte qu'il prendra la décision finale, pour chacune des deux applications déclarées, Email et VoD, en tenant compte de paramètres tels que : la charge des Noeuds B. Le RNC communiquera au terminal sa décision finale pour les deux applications en choisissant le Noeud B sur le réseau RAN1 (toujours grâce au message de décision défini par l'invention). Ainsi, les deux applications pourront être gérées en accord avec les graphes de décision mis en place par le GGSN et le RNC.

Sur les figures 8 et 9, les modules de décision des entités faisant partie des graphes de décision pour l'application Email sont représentés par des ovales noirs, et les modules de décision des entités faisant partie des graphes de décision pour l'application de VoD sont représentés par des ovales blancs.

Lorsque le terminal va se déplacer, il va détecter deux nouveaux points d'accès appartenant à deux nouveaux réseaux d'accès : RAN2 (géré par l'opérateur du RAN1) et RAN3 (géré par un autre opérateur). Le terminal va alors en informer le GGSN. Le GGSN reconsidère la possibilité de créer des graphes de décision différents.

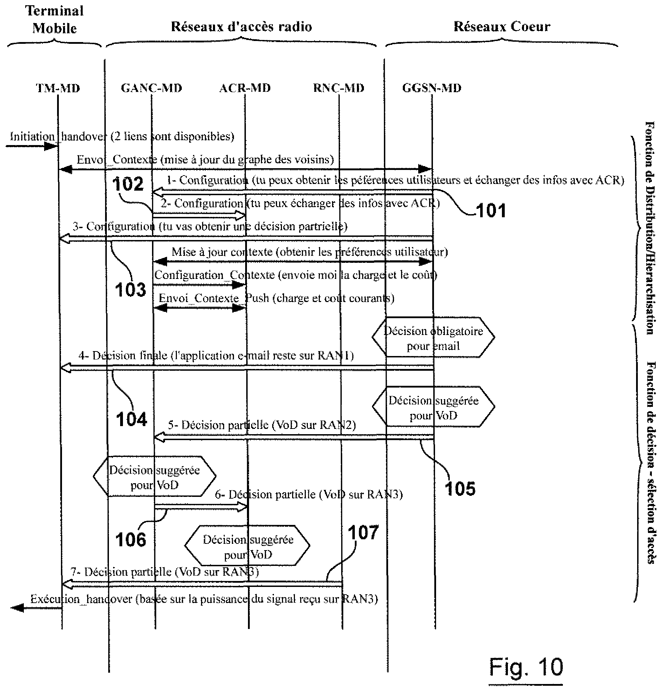

Concernant l'application Email qui demande une grande sécurité, il décide de ne pas modifier le graphe. Il envoie au terminal un message de décision finale en ce sens (104, fig.10).

Pour l'application de VoD, le GGSN indique au GANC (Contrôleur de réseau d'accès générique), dans un message de configuration (141, fig.10), la possibilité d'échanger des informations avec l'ACR (Routeur d'accès contrôleur). Il lui indique aussi de tenir compte des préférences utilisateur en terme de coût. Le GGSN indique aussi à l'ACR, dans un message de configuration (102, fig.10), qu'il pourra échanger des informations avec le GANC. Le GGSN envoie également un message de configuration (103, fig.10) au terminal pour lui indiquer qu'il devra prendre une décision finale à partir d'une décision partielle qu'il aura reçue au préalable. Tous ces messages sont les messages de configuration définis par l'invention.

Le GGSN indique au GANC (RAN2), dans un message de décision partielle (105, fig.10) de basculer l'application de VoD sur le RAN2 ; c'est une décision partielle. Le GANC prend une décision partielle en tenant compte des paramètres suivants : les préférences de l'utilisateur en terme de coût et la charge de ses points d'accès. Or ses points d'accès sont trop chargés, il décide de donner une décision partielle à l'ACR du RAN3, dans un message de décision partielle (106, fig.10), lui indiquant de faire passer l'application de VoD sur le RAN3.

L'ACR prend une décision partielle en tenant compte des paramètres suivants : la charge de ses points d'accès. L'ACR envoie alors une décision partielle de handover de l'application VoD au terminal, dans un message de décision (107, fig.10).

C'est le terminal qui prendra la décision finale en tenant compte des paramètres suivant : la qualité du signal radio sur les APs du RAN3. Le terminal exécutera alors le handover vers le RAN3, pour l'application VoD.

Les nouveaux graphes de décision (possibles et actifs) sont représentés sur la **figure 9****.**

Le graphe de décision actif 82 pour le premier flux (application Email), représenté en trait plein épais, est inchangé par rapport à la figure 8 et reste confondu avec le(s) graphe(s) de décision possible(s) pour ce premier flux. Il implique le GGSN et le RNC.

Le nouveau graphe de décision actif 91 pour le second flux (application VoD), représenté en trait plein fin est différent du précédent (référencé 81 et représenté en pointillés sur la figure 9). Il implique le GGSN, le GANC, l'ACR et le terminal TM. Dans cet exemple, le nouveau graphe de décision actif 91 est confondu avec le(s) nouveau(x) graphe(s) de décision possible(s).

Cet exemple d'implémentation montre bien que les graphes de décision (possibles et actifs) sont construits dynamiquement pour chaque application de chaque terminal. Cet exemple montre aussi l'économie de signalisation qui est réalisée en évitant de transférer des paramètres entre les entités (cas de la charge du GANC par exemple).

Enfin, le diagramme de séquence de messages de la **figure 10** montre comment les nouveaux messages définis par l'invention (représentés en doubles traits) s'intègrent dans un processus complet de prise de décision (cas de la figure 9). Les messages de configuration sont référencés 101 à 103, et les messages de décision 104 à 107.

L'annexe 1 détaille un exemple de réalisation des messages suivants :
- le message (101) de configuration envoyé par le GGSN-MD vers le GANC-MD ;
- le message (102) de configuration envoyé par le GANC-MD vers l'ACR-MD ; et
- le message (107) de décision envoyé par l'ACR-MD vers le terminal TM-MD.

La **figure 11** présente la structure simplifiée d'un équipement de communication 110 selon un mode de réalisation particulier de l'invention, intégrant un module de décision capable d'émettre et/ou traiter des messages de configuration et/ou des messages de décision selon au moins un mode de réalisation (par exemple celui présenté ci-dessus en relation avec les figures 8 et 9) du procédé selon l'invention de construction d'au moins un graphe de décision pour la gestion d'au moins un flux applicatif affecté à un terminal.

Cet équipement est par exemple le GGSN, le RNC, le GANC, l'ACR ou le terminal TM des figures 8 et 9.

Il comprend une mémoire 113, une unité de traitement 111, équipée par exemple d'un microprocesseur, et pilotée par un programme d'ordinateur 112 d'émission et/ou traitement de messages de configuration et/ou des messages de décision selon l'invention.

A l'initialisation, les instructions de code du programme d'ordinateur 112 sont par exemple chargées dans une mémoire RAM avant d'être exécutées par le processeur de l'unité de traitement 111 pour :
- générer un message de configuration 115 et le transmettre à un autre équipement comprenant un module de décision ; et/ou
- traiter un message de configuration 114 provenant d'un autre équipement comprenant un module de décision (et éventuellement générer un autre message de configuration 115 et le transmettre à un autre équipement comprenant un module de décision) ; et/ou
- générer un message de décision 117 et le transmettre à un autre équipement comprenant un module de décision ; et/ou
- traiter un message de décision 116 provenant d'un autre équipement comprenant un module de décision (et éventuellement générer un autre message de décision 117 et le transmettre à un autre équipement comprenant un module de décision).

Dans le cas précité où l'invention est implantée partiellement ou totalement sous forme logicielle, dans chaque équipement comprenant un module de décision pouvant participer à la construction dynamique de graphes de décision possibles et actifs, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur. L'invention est définie par l'étendue des revendications.

### ANNEXE 1 :

### Exemple de messages de configuration et de décision

### Message (101) de configuration GGSN-MD -> GANC-MD

Adresse du MD (module de décision) source: adresse IP GGSN
Adresse du MD destination: adresse IP GANC
Identification du couple: (identifiant MAC, identifiant de Flux)
Deux structures de distribution dans ce cas:
   Adresse du MD tiers: adresse IP GGSN
   Rôle du MD: Hiérarchique
   Caractère de la méthode de distribution: par défaut
   Caractère de la méthode de décision: suggérée
   Méthode de décision: fonction utilité
   Granularité supportée : par flux
   Paramètre définissant la méthode de décision: a=3
   Paramètre de la méthode de décision:
      Nom du paramètre: Profil Utilisateur
      Adresse du module contenant ce paramètre: adresse IP GGSN Adresse du MD tiers: adresse IP ACR
   Rôle du MD: Pair
   Caractère de la méthode de distribution: obligatoire
   Méthode de distribution: Conflict free
   Caractère de la méthode de décision: suggérée
   Méthode de décision: fonction utilité
   Granularité supportée : par flux
   Paramètre définissant la méthode de décision: a=2
   Paramètre de la méthode de décision
      Nom du paramètre: Coût
      Adresse du module contenant ce paramètre: adresse IP ACR
Message (102) de configuration GANC-MD -> ACR-MD
Adresse du MD source: adresse IP GANC
Adresse du MD destination: adresse IP ACR
Identification du couple: (identifiant MAC, tous les flux)
Une structure de distribution dans ce cas:
   Adresse du MD tiers: adresse IP GANC
   Rôle du MD: Pair
   Caractère de la méthode de distribution: obligatoire
   Méthode de distribution: conflict free
   Caractère de la méthode de décision: par défaut
   Granularité supportée : par flux
Massage (107) de décision ACR-MD -> TM-MD
Adresse du MD source: adresse IP ACR
Adresse du MD destination: adresse IP TM
Type de décision: partielle
Identification du couple: (identifiant MAC, identifiant flux (VoD))
Décision: handover (identifiant AP (Point d'accès); identifiant RAN3)

### ANNEXE 2 :

### Exemple de déclencheurs et paramètres pouvant entrer dans la décision de mobilité

### 1) Exemples de paramètres

### * Profil de description du terminal:

Carte réseau disponible et la qualité de service associée
Support du multi-accès

### * Profil de description des flux:

Identifiant des flux pour les applications en cours
Type de flux (adaptif ou pas)
Classe de flux (conversationnel, interactif, ...)
Qualité de service minimal (bande passante, délai, gigue, taux d'erreur ...)

### * Profil utilisateur:

Identifiant
Réseau d'accès préféré par application
Réseau d'accès interdit par application
Préférence coût versus qualité
Niveau de sécurité par application
Priorité par application

### * Profil opérateur:

Réseau préféré par utilisateur et par application
Réseau interdit par utilisateur et par application
Liste des réseaux avec lesquels un accord a été établit
Priorité par application
Préférence de répartition de charge

### * Profil réseau d'accès:

Identifiant
Charge
Niveau de signal par terminal
Qualité de signal par terminal
Coût monétaire
Niveau de sécurité
Qualité de service disponible
Qualité de service typique

### 2) Exemples de déclencheurs

Congestion
Décongestion
Lancement d'une application
Variation d'un paramètre de qualité de service
Perte de couverture imminente
Découverte d'un nouveau point d'accès
Diminution de la qualité perçue
Modification d'un profil utilisateur
Modification d'une politique opérateur

## Revendications

1. Procédé de construction d'au moins deux graphes de décision, pour la gestion d'au moins un flux applicatif affecté à un terminal (TM) et établi entre ledit terminal et un correspondant (C) via au moins un réseau de communication,
ledit procédé étant **caractérisé en ce qu'**un graphe de décision est défini par une combinaison d'un ensemble de modules de décision et des relations possibles entre lesdits modules de décision, une prise de décision pour la gestion dudit au moins un flux applicatif étant distribuée au sein dudit ensemble de modules de décisions, lesdits modules de décision, ledit terminal mobile et ledit correspondant sont reliés entre eux par des moyens de communication, et **en ce qu'**il comprend une étape (71) de construction dynamique d'au moins un graphe de décision possible pour ledit au moins un flux applicatif affecté audit terminal, comprenant elle-même une étape d'échange d'au moins un message de configuration (73 à 711 ; 101 à 103) entre au moins deux modules de décision appartenant audit ensemble de modules de décision (MD1 à MD7), ladite une étape (71) de construction dynamique étant mise en oeuvre à au moins deux reprises, délivrant au moins deux graphes de décisions possibles.

2. Procédé selon la revendication 1, **caractérisé en ce que** chaque message de configuration comprend les champs suivants :
- un champ (121) contenant un identifiant du module de décision source dudit message de configuration ;
- un champ (122) contenant un identifiant du module de décision destinataire dudit message de configuration ;
- un champ (123) contenant un identifiant d'au moins ledit terminal, pour lequel ledit message de configuration s'applique ;
- un champ (124) contenant au moins une structure de distribution, ladite structure de distribution permettant de définir, en fonction d'une valeur d'au moins un paramètre compris dans ladite structure, l'application d'une méthode de distribution à appliquer entre un module de décision destinataire et un module de décision tiers.

3. Procédé selon l'une quelconque des revendications 1 et 2, **caractérisé en ce que** chaque message de configuration est spécifique à un terminal et à un flux applicatif.

4. Procédé selon l'une quelconque des revendications 2 et 3, **caractérisé en ce que** chaque structure de distribution comprend les champs suivants :
- un champ contenant un identifiant d'un module de décision tiers, distinct dudit module de décision destinataire ;
- un champ contenant un rôle dudit module de décision tiers ;
- un champ contenant un caractère d'une méthode de distribution à utiliser entre le module de décision destinataire et ledit module de décision tiers ;
- un champ contenant un caractère d'une méthode de décision à utiliser par le module de décision destinataire.

5. Procédé selon l'une quelconque des revendications 2 à 4, **caractérisé en ce que** chaque structure de distribution comprend en outre au moins un champ supplémentaire appartenant au groupe comprenant :
- un champ contenant une granularité supportée, ladite granularité permettant de définir une nature sur laquelle une prise de décision porte ;
- un champ contenant une méthode de distribution à utiliser entre le module de décision destinataire et ledit module de décision tiers ;
- un champ contenant au moins un paramètre définissant ladite méthode de distribution ;
- un champ contenant une méthode de décision à utiliser par le module de décision destinataire ;
- un champ contenant au moins un paramètre définissant ladite méthode de décision.

6. Procédé selon l'une quelconque des revendications 2 à 5, **caractérisé en ce que** chaque message de configuration comprend en outre un champ supplémentaire (125) contenant au moins une structure de déclencheur d'une méthode de décision à utiliser par le module de décision destinataire, ladite structure de déclencheur permettant de déclencher, en fonction d'une valeur d'au moins un paramètre compris dans ladite structure, l'application d'une méthode de décision.

7. Procédé selon l'une quelconque des revendications 2 à 6, **caractérisé en ce que** chaque message de configuration comprend en outre un champ supplémentaire (126) contenant au moins une structure de paramètres de décision à utiliser par le module de décision destinataire, chaque structure de paramètres comprenant les champs suivants :
- un champ contenant un identifiant d'un paramètre donné ;
- un champ contenant un identifiant du module de décision contenant le paramètre donné ;
- un champ contenant un identifiant du module de décision destinataire du paramètre donné ;
- un champ contenant une fréquence d'envoi du paramètre donné.

8. Procédé selon l'une quelconque des revendications 1 à 7, **caractérisé en ce qu'**il comprend en outre une étape (72) de construction dynamique d'un unique graphe de décision actif pour ledit au moins un flux applicatif affecté audit terminal, comprenant elle-même une étape d'échange d'au moins un message de décision (712 à 716 ;104 à 107) entre au moins deux modules de décision, en respectant une configuration préalablement créée par l'étape de construction dynamique d'au moins un graphe de décision possible, ledit unique graphe de décision actif étant le ou l'un des graphes de décision possibles préalablement construits pour ledit au moins un flux applicatif, et le dit au moins un message de décision permettant en fonction d'une valeur d'au moins un paramètre compris dans ledit message, de prendre une décision.

9. Procédé selon la revendication 8, **caractérisé en ce que** chaque message de décision comprend les champs suivants :
- un champ (131) contenant un identifiant du module de décision source dudit message de décision ;
- un champ (132) contenant un identifiant du module de décision destinataire dudit message de décision ;
- un champ (133) contenant un type de décision, partielle ou finale ;
- un champ (134) contenant un identifiant d'au moins ledit terminal, pour lequel ledit message de décision s'applique ;
- un champ (135) contenant une décision.

10. Procédé selon l'une quelconque des revendications 1 à 9, **caractérisé en ce que** ledit ensemble déterminé de modules de décision (MD1 à MD7) appartiennent à une architecture de réseaux :
- distribuée, du fait qu'au moins deux modules de décision appartiennent à un même niveau de hiérarchie de ladite architecture, et/ou
- hiérarchisée, du fait qu'au moins deux modules de décision appartiennent à deux niveaux de hiérarchie distincts de ladite architecture.

11. Procédé selon l'une quelconque des revendications 1 à 10, **caractérisé en ce que** la gestion dudit au moins un flux applicatif affecté audit terminal appartient au groupe comprenant :
- des gestions de mobilité ;
- des gestions de répartition de ressources de qualité de service.

12. Equipement de communication comprenant un module de décision (MD1 à MD7), **caractérisé en ce qu'**il comprend des premiers moyens d'échange, permettant d'échanger au moins un message de configuration avec au moins un autre module de décision appartenant à un ensemble déterminé de modules de décision, de façon à participer à la construction dynamique d'au moins deux graphes de décision possibles pour la gestion d'au moins un flux applicatif affecté à un terminal et établi entre ledit terminal et un correspondant via au moins un réseau de communication, lesdits modules de décision, ledit terminal mobile et ledit correspondant sont reliés entre eux par des moyens de communication, un graphe de décision étant défini par une combinaison d'un ensemble de modules de décision et des relations possibles entre lesdits modules de décision, une prise de décision pour la gestion dudit au moins un flux applicatif étant distribuée au sein dudit ensemble de modules de décision, ladite construction dynamique étant mise en oeuvre à au moins deux reprises, délivrant au moins deux graphes de décisions possibles.

13. Equipement de communication selon la revendication 12, **caractérisé en ce qu'**il comprend en outre des seconds moyens d'échange, permettant d'échanger au moins un message de décision, le dit au moins un message de décision permettant en fonction d'une valeur d'au moins un paramètre compris dans ledit message, de prendre une décision, avec au moins un autre module de décision appartenant audit ensemble de modules de décision, en respectant au moins un graphe de décision possible préalablement déterminé, de façon à participer à la construction dynamique d'un unique graphe de décision actif pour ledit au moins un flux applicatif affecté audit terminal.

14. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé selon au moins une des revendications 1 à 11 de construction d'au moins un graphe de décision pour la gestion d'au moins un flux applicatif affecté à un terminal, lorsque ledit programme est exécuté sur un ordinateur.

15. Signal échangé entre un module de décision source et un module de décision destinataire, dans le cadre de la construction dynamique d'au moins deux graphes de décision possibles pour la gestion d'au moins un flux applicatif affecté à un terminal et établi entre ledit terminal et un correspondant via au moins un réseau de communication, ladite de construction dynamique étant mise en oeuvre à au moins deux reprises, délivrant au moins deux graphes de décisions possibles,
un graphe de décision étant défini par une combinaison d'un ensemble de modules de décision et des relations possibles entre lesdits modules de décision, une prise de décision pour la gestion dudit au moins un flux applicatif étant distribuée au sein dudit ensemble de modules de décision, lesdits modules de décision, ledit terminal mobile et ledit correspondant sont reliés entre eux par des moyens de communication, ledit signal étant **caractérisé en ce qu'**il porte un message de configuration (73 à 711 ; 101 à 103) comprenant :
- un champ contenant un identifiant dudit module de décision source dudit message de configuration ;
- un champ contenant un identifiant dudit module de décision destinataire dudit message de configuration ;
- un champ contenant un identifiant d'au moins ledit terminal, pour lequel ledit message de configuration s'applique ;
- un champ contenant au moins une structure de distribution, ladite structure de distribution permettant de définir, en fonction d'une valeur d'au moins un paramètre compris dans ladite structure, l'application d'une méthode de distribution à appliquer entre un module de décision destinataire et un module de décision tiers.

## Patentansprüche

1. Verfahren zum Aufbauen von mindestens zwei Entscheidungsgraphen zur Verwaltung mindestens eines applikativen Stroms, der einem Endgerät (TM) zugeordnet ist und zwischen dem Endgerät und einem Teilnehmer (C) über mindestens ein Kommunikationsnetz hergestellt ist, wobei das Verfahren **dadurch gekennzeichnet ist, dass** ein Entscheidungsgraph von einer Kombination einer Anordnung von Entscheidungsmodulen und möglichen Beziehungen zwischen den Entscheidungsmodulen definiert ist, wobei eine Entscheidungsfällung zur Verwaltung des mindestens einen applikativen Stroms innerhalb der Anordnung von Entscheidungsmodulen verteilt ist, die Entscheidungsmodule, das mobile Endgerät und der Teilnehmer durch Kommunikationsmittel untereinander verbunden sind, und dadurch, dass es einen Schritt (71) des dynamischen Aufbauens mindestens eines möglichen Entscheidungsgraphen für den mindestens einen applikativen Strom, der dem Endgerät zugeordnet ist, umfasst, der seinerseits einen Schritt des Austauschens mindestens einer Konfigurationsnachricht (73 bis 711; 101 bis 103) zwischen mindestens zwei Entscheidungsmodulen, die zu der Anordnung von Entscheidungsmodulen (MD1 bis MD7) gehören, umfasst, wobei ein Schritt (71) des dynamischen Aufbauens mindestens zweimal durchgeführt wird, wobei mindestens zwei mögliche Entscheidungsgraphen geliefert werden.

2. Verfahren nach Anspruch 1, **dadurch gekennzeichnet, dass** jede Konfigurationsnachricht die folgenden Felder umfasst:
- ein Feld (121), das eine Kennung des Quell-Entscheidungsmoduls der Konfigurationsnachricht enthält;
- ein Feld (122), das eine Kennung des Ziel-Entscheidungsmoduls der Konfigurationsnachricht enthält;
- ein Feld (123), das eine Kennung zumindest des Endgeräts, für das die Konfigurationsnachricht gilt, enthält;
- ein Feld (124), das mindestens eine Verteilungsstruktur enthält, wobei die Verteilungsstruktur erlaubt, in Abhängigkeit von einem Wert mindestens eines Parameters, der in der Struktur enthalten ist, die Anwendung eines Verteilungsverfahrens zu definieren, das zwischen einem Ziel-Entscheidungsmodul und einem Dritt-Entscheidungsmodul anzuwenden ist.

3. Verfahren nach einem der Ansprüche 1 und 2, **dadurch gekennzeichnet, dass** jede Konfigurationsnachricht spezifisch für ein Endgerät und einen applikativen Strom ist.

4. Verfahren nach einem der Ansprüche 2 und 3, **dadurch gekennzeichnet, dass** jede Verteilungsstruktur die folgenden Felder umfasst:
- ein Feld, das eine Kennung eines Dritt-Entscheidungsmoduls, das von dem Ziel-Entscheidungsmodul verschieden ist, enthält;
- ein Feld, das eine Rolle des Dritt-Entscheidungsmoduls enthält;
- ein Feld, das einen Charakter eines Verteilungsverfahrens enthält, das zwischen dem Ziel-Entscheidungsmodul und dem Dritt-Entscheidungsmodul zu nutzen ist;
- ein Feld, das einen Charakter eines Entscheidungsverfahrens enthält, das von dem Ziel-Entscheidungsmodul zu nutzen ist.

5. Verfahren nach einem der Ansprüche 2 bis 4, **dadurch gekennzeichnet, dass** jede Verteilungsstruktur ferner mindestens ein zusätzliches Feld umfasst, das zu der Gruppe gehört, die Folgendes umfasst:
- ein Feld, das eine unterstützte Granularität enthält, wobei die Granularität erlaubt, eine Natur zu definieren, auf die sich eine Entscheidungsfällung bezieht;
- ein Feld, das ein Verteilungsverfahren enthält, das zwischen dem Ziel-Entscheidungsmodul und dem Dritt-Entscheidungsmodul zu nutzen ist;
- ein Feld, das mindestens einen Parameter enthält, der das Verteilungsverfahren definiert;
- ein Feld, das ein Entscheidungsverfahren enthält, das von dem Ziel-Entscheidungsmodul zu nutzen ist;
- ein Feld, das mindestens einen Parameter enthält, der das Entscheidungsverfahren definiert.

6. Verfahren nach einem der Ansprüche 2 bis 5, **dadurch gekennzeichnet, dass** jede Konfigurationsnachricht ferner ein zusätzliches Feld (125) umfasst, das mindestens eine Auslöserstruktur eines Entscheidungsverfahrens enthält, das von dem Ziel-Entscheidungsmodul zu nutzen ist, wobei die Auslöserstruktur erlaubt, in Abhängigkeit von einem Wert mindestens eines Parameters, der in der Struktur enthalten ist, die Anwendung eines Entscheidungsverfahrens auszulösen.

7. Verfahren nach einem der Ansprüche 2 bis 6, **dadurch gekennzeichnet, dass** jede Konfigurationsnachricht ferner ein zusätzliches Feld (126) umfasst, das mindestens eine Struktur von Entscheidungsparametern enthält, die von dem Ziel-Entscheidungsmodul zu nutzen ist, wobei jede Struktur von Parametern die folgenden Felder umfasst:
- ein Feld, das eine Kennung eines gegebenen Parameters enthält;
- ein Feld, das eine Kennung des Entscheidungsmoduls enthält, das den gegebenen Parameter enthält;
- ein Feld, das eine Kennung des Ziel-Entscheidungsmoduls des gegebenen Parameters enthält;
- ein Feld, das eine Sendefrequenz des gegebenen Parameters enthält.

8. Verfahren nach einem der Ansprüche 1 bis 7, **dadurch gekennzeichnet, dass** es ferner einen Schritt (72) des dynamischen Aufbauens eines einzigen aktiven Entscheidungsgraphen für den mindestens einen applikativen Strom, der dem Endgerät zugeordnet ist, umfasst, der seinerseits einen Schritt des Austauschens mindestens einer Entscheidungsnachricht (712 bis 716; 104 bis 107) zwischen mindestens zwei Entscheidungsmodulen umfasst, wobei eine Konfiguration eingehalten wird, die zuvor durch den Schritt des dynamischen Aufbauens mindestens eines möglichen Entscheidungsgraphen erzeugt wurde, wobei der einzige aktive Entscheidungsgraph der oder einer der möglichen Entscheidungsgraphen ist, die zuvor für den mindestens einen applikativen Strom aufgebaut wurden, und wobei die mindestens eine Entscheidungsnachricht erlaubt, in Abhängigkeit von einem Wert mindestens eines Parameters, der in der Nachricht enthalten ist, eine Entscheidung zu fällen.

9. Verfahren nach Anspruch 8, **dadurch gekennzeichnet, dass** jede Entscheidungsnachricht die folgenden Felder umfasst:
- ein Feld (131), das eine Kennung des Quell-Entscheidungsmoduls der Entscheidungsnachricht enthält;
- ein Feld (132), das eine Kennung des Ziel-Entscheidungsmoduls der Entscheidungsnachricht enthält;
- ein Feld (133), das einen Typ einer teilweisen oder endgültigen Entscheidung enthält;
- ein Feld (134), das eine Kennung zumindest des Endgeräts, für das die Entscheidungsnachricht gilt, enthält;
- ein Feld (135), das eine Entscheidung enthält.

10. Verfahren nach einem der Ansprüche 1 bis 9, **dadurch gekennzeichnet, dass** die bestimmte Anordnung von Entscheidungsmodulen (MD1 bis MD7) einer Architektur von Netzwerken gehört, die:
- verteilt ist, da mindestens zwei Entscheidungsmodule einer selben Hierarchiestufe der Architektur angehören, und/oder
- hierarchisch ist, da mindestens zwei Entscheidungsmodule zwei verschiedenen Hierarchiestufen der Architektur angehören.

11. Verfahren nach einem der Ansprüche 1 bis 10, **dadurch gekennzeichnet, dass** die Verwaltung des mindestens einen applikativen Stroms, der dem Endgerät zugeordnet ist, zu der Gruppe gehört, die Folgendes umfasst:
- Verwaltungen von Mobilität;
- Verwaltungen einer Verteilung von Servicequalitätsressourcen.

12. Kommunikationseinrichtung, umfassend ein Entscheidungsmodul (MD1 bis MD7), **dadurch gekennzeichnet, dass** sie erste Austauschmittel umfasst, die erlauben, mindestens eine Konfigurationsnachricht mit mindestens einem anderen Entscheidungsmodul auszutauschen, das einer bestimmten Anordnung von Entscheidungsmodulen angehört, um am dynamischen Aufbauen von mindestens zwei möglichen Entscheidungsgraphen zur Verwaltung mindestens eines applikativen Stroms teilzunehmen, der einem Endgerät zugeordnet ist und zwischen dem Endgerät und einem Teilnehmer über mindestens ein Kommunikationsnetz hergestellt ist, wobei die Entscheidungsmodule, das mobile Endgerät und der Teilnehmer durch Kommunikationsmittel untereinander verbunden sind, ein Entscheidungsgraph von einer Kombination einer Anordnung von Entscheidungsmodulen und möglichen Beziehungen zwischen den Entscheidungsmodulen definiert ist, eine Entscheidungsfällung zur Verwaltung des mindestens einen applikativen Stroms innerhalb der Anordnung von Entscheidungsmodulen verteilt ist, das dynamische Aufbauen mindestens zweimal durchgeführt wird, wobei mindestens zwei mögliche Entscheidungsgraphen geliefert werden.

13. Kommunikationseinrichtung nach Anspruch 12, **dadurch gekennzeichnet, dass** sie ferner zweite Austauschmittel umfasst, die erlauben, mit mindestens einem anderen Entscheidungsmodul, das der Anordnung von Entscheidungsmodulen angehört, mindestens eine Entscheidungsnachricht auszutauschen, wobei die mindestens eine Entscheidungsnachricht erlaubt, in Abhängigkeit von einem Wert mindestens eines Parameters, der in der Nachricht enthalten ist, eine Entscheidung zu fällen, wobei mindestens ein vorbestimmter möglicher Entscheidungsgraph eingehalten wird, um am dynamischen Aufbauen eines einzigen aktiven Entscheidungsgraphen für den mindestens einen applikativen Strom, der dem Endgerät zugeordnet ist, teilzunehmen.

14. Computerprogrammprodukt, das aus einem Kommunikationsnetz herunterladbar ist und/oder auf einem computerlesbaren Datenträger gespeichert ist und/oder von einem Prozessor ausführbar ist, **dadurch gekennzeichnet, dass** es Programmcodeanweisungen zur Ausführung der Schritte des Verfahrens nach mindestens einem der Ansprüche 1 bis 11 zum Aufbauen mindestens eines Entscheidungsgraphen zur Verwaltung mindestens eines applikativen Stroms, der einem Endgerät zugeordnet ist, wenn das Programm auf einem Computer ausgeführt wird, umfasst.

15. Signal, das zwischen einem Quell-Entscheidungsmodul und einem Ziel-Entscheidungsmodul im Rahmen des dynamischen Aufbauens von mindestens zwei möglichen Entscheidungsgraphen zur Verwaltung mindestens eines applikativen Stroms, der einem Endgerät zugeordnet ist und zwischen dem Endgerät und einem Teilnehmer über mindestens ein Kommunikationsnetz hergestellt ist, ausgetauscht wird, wobei das dynamische Aufbauen mindestens zweimal durchgeführt wird, wobei mindestens zwei mögliche Entscheidungsgraphen geliefert werden,
wobei ein Entscheidungsgraph von einer Kombination einer Anordnung von Entscheidungsmodulen und möglichen Beziehungen zwischen den Entscheidungsmodulen definiert ist, eine Entscheidungsfällung zur Verwaltung des mindestens einen applikativen Stroms innerhalb der Anordnung von Entscheidungsmodulen verteilt ist, die Entscheidungsmodule, das mobile Endgerät und der Teilnehmer durch Kommunikationsmittel untereinander verbunden sind, wobei das Signal **dadurch gekennzeichnet ist, dass** es eine Konfigurationsnachricht (73 bis 711; 101 bis 103) trägt, umfassend:
- ein Feld, das eine Kennung des Quell-Entscheidungsmoduls der Konfigurationsnachricht enthält;
- ein Feld, das eine Kennung des Ziel-Entscheidungsmoduls der Konfigurationsnachricht enthält;
- ein Feld, das eine Kennung zumindest des Endgeräts, für das die Konfigurationsnachricht gilt, enthält;
- ein Feld, das mindestens eine Verteilungsstruktur enthält, wobei die Verteilungsstruktur erlaubt, in Abhängigkeit von einem Wert mindestens eines Parameters, der in der Struktur enthalten ist, die Anwendung eines Verteilungsverfahrens zu definieren, das zwischen einem Ziel-Entscheidungsmodul und einem Dritt-Entscheidungsmodul anzuwenden ist.

## Claims

1. Method for constructing at least two decision graphs for the management of at least one application flow assigned to a terminal (TM) and set up between said terminal and a correspondent (C) via at least one communication network,
said method being **characterized in that** a decision graph is defined by a combination of a set of decision modules and possible relationships between said decision modules, the making of a decision for the management of said at least one application flow being distributed within said set of decision modules, said decision modules, said mobile terminal and said correspondent are linked to one another by communication means, and **in that** it comprises a step (71) of dynamically constructing at least one possible decision graph for said at least one application flow assigned to said terminal, said step itself comprising a step of exchanging at least one configuration message (73 to 711; 101 to 103) between at least two decision modules belonging to said set of decision modules (MD1 to MD7), said dynamic construction step (71) being implemented on at least two occasions and delivering at least two possible decision graphs.

2. Method according to Claim 1, **characterized in that** each configuration message comprises the following fields:
- a field (121) containing an identifier of the source decision module of said configuration message;
- a field (122) containing an identifier of the receiver decision module of said configuration message;
- a field (123) containing an identifier of at least said terminal to which said configuration message applies;
- a field (124) containing at least one distribution structure, said distribution structure making it possible to define, on the basis of a value of at least one parameter contained in said structure, the application of a distribution method to be applied between a receiver decision module and a third-party decision module.

3. Method according to either one of Claims 1 and 2, **characterized in that** each configuration message is specific to one terminal and to one application flow.

4. Method according to either one of Claims 2 and 3, **characterized in that** each distribution structure comprises the following fields:
- a field containing an identifier of a third-party decision module, different from said receiver decision module;
- a field containing a role of said third-party decision module;
- a field containing a type of distribution method to be used between the receiver decision module and said third-party decision module;
- a field containing a type of decision method to be used by the receiver decision module.

5. Method according to any one of Claims 2 to 4, **characterized in that** each distribution structure furthermore comprises at least one additional field belonging to the group comprising:
- a field containing a granularity that is supported, said granularity making it possible to define a nature to which the making of a decision relates;
- a field containing a distribution method to be used between the receiver decision module and said third-party decision module;
- a field containing at least one parameter defining said distribution method;
- a field containing a decision method to be used by the receiver decision module;
- a field containing at least one parameter defining said decision method.

6. Method according to any one of Claims 2 to 5, **characterized in that** each configuration message furthermore comprises an additional field (125) containing at least one structure for triggering a decision method to be used by the receiver decision module, said triggering structure making it possible to trigger, on the basis of a value of at least one parameter contained in said structure, the application of a decision method.

7. Method according to any one of Claims 2 to 6, **characterized in that** each configuration message furthermore comprises an additional field (126) containing at least one decision parameter structure to be used by the receiver decision module, each parameter structure comprising the following fields:
- a field containing an identifier of a given parameter;
- a field containing an identifier of the decision module containing the given parameter;
- a field containing an identifier of the receiver decision module of the given parameter;
- a field containing a frequency of sending of the given parameter.

8. Method according to any one of Claims 1 to 7, **characterized in that** it furthermore comprises a step (72) of dynamically constructing a single active decision graph for said at least one application flow assigned to said terminal, said step itself comprising a step of exchanging at least one decision message (712 to 716; 104 to 107) between at least two decision modules while complying with a configuration created beforehand by the step of dynamically constructing at least one possible decision graph, said single active decision graph being the or one of the possible decision graphs constructed beforehand for said at least one application flow, and said at least one decision message making it possible to make a decision on the basis of a value of at least one parameter contained in said message.

9. Method according to Claim 8, **characterized in that** each decision message comprises the following fields:
- a field (131) containing an identifier of the source decision module of said decision message;
- a field (132) containing an identifier of the receiver decision module of said decision message;
- a field (133) containing a type of decision, partial or final;
- a field (134) containing an identifier of at least said terminal to which said decision message applies;
- a field (135) containing a decision.

10. Method according to any one of Claims 1 to 9, **characterized in that** said given set of decision modules (MD1 to MD7) belongs to a network architecture that is:
- distributed, on account of the fact that at least two decision modules belong to one and the same hierarchy level of said architecture, and/or
- hierarchized, on account of the fact that at least two decision modules belong to two different hierarchical levels of said architecture.

11. Method according to any one of Claims 1 to 10, **characterized in that** the management of said at least one application flow assigned to said terminal belongs to the group comprising:
- mobility management;
- quality of service resource distribution management.

12. Communication device comprising a decision module (MD1 to MD7), **characterized in that** it comprises first exchanging means, making it possible to exchange at least one configuration message with at least one other decision module belonging to a given set of decision modules, so as to contribute to the dynamic construction of at least two possible decision graphs for the management of at least one application flow assigned to a terminal and set up between said terminal and a correspondent via at least one communication network, said decision modules, said mobile terminal and said correspondent are linked to one another by communication means, a decision graph being defined by a combination of a set of decision modules and possible relationships between said decision modules, the making of a decision for the management of said at least one application flow being distributed within said set of decision modules, said dynamic construction being implemented on at least two occasions and delivering at least two possible decision graphs.

13. Communication device according to Claim 12, **characterized in that** it furthermore includes second exchanging means, making it possible to exchange at least one decision message, said at least one decision message making it possible, on the basis of a value of at least one parameter contained in said message, to make a decision, with at least one other decision module belonging to said set of decision modules, while complying with at least one possible decision graph determined beforehand, so as to contribute to the dynamic construction of a single active decision graph for said at least one application flow assigned to said terminal.

14. Computer program product downloadable from a communication network and/or recorded on a computer-readable medium and/or able to be executed by a processor, **characterized in that** it comprises program code instructions for executing the steps of the method according to at least one of Claims 1 to 11 for constructing at least one decision graph for the management of at least one application flow assigned to a terminal when said program is executed on a computer.

15. Signal exchanged between a source decision module and a receiver decision module, in the context of the dynamic construction of at least two possible decision graphs for the management of at least one application flow assigned to a terminal and set up between said terminal and a correspondent via at least one communication network, said dynamic construction being implemented on at least two occasions and delivering at least two possible decision graphs,
a decision graph being defined by a combination of a set of decision modules and possible relationships between said decision modules, the making of a decision for the management of said at least one application flow being distributed within said set of decision modules, said decision modules, said mobile terminal and said correspondent are linked to one another by communication means, said signal being **characterized in that** it carries a configuration message (73 to 711; 101 to 103) comprising:
- a field containing an identifier of said source decision module of said configuration message;
- a field containing an identifier of said receiver decision module of said configuration message;
- a field containing an identifier of at least said terminal to which said configuration message applies;
- a field containing at least one distribution structure, said distribution structure making it possible to define, on the basis of a value of at least one parameter contained in said structure, the application of a distribution method to be applied between a receiver decision module and a third-party decision module.
